Europäisches Patentamt

European Patent Office

Office européen des brevets

(19)

(11) Publication number: **0 405 840 A1**

# EUROPEAN PATENT APPLICATION

(21) Application number: 90306796.5

(22) Date of filing: 21.06.90

(51) Int. Cl.⁵: **G01L 5/00, G01P 1/07**

(30) Priority: 27.06.89 JP 165803/89

(43) Date of publication of application:
**02.01.91 Bulletin 91/01**

(84) Designated Contracting States:
**DE FR GB IT**

(71) Applicant: **YAMAICHI ELECTRIC MFG. CO. LTD..**
**28-7, Nakamagome 3-chome**
**Ohta-ku Tokyo(JP)**

(72) Inventor: **Iwase, Haruhiko**
**2-9, Arima 8-chome, Miyamae-ku**
**Kawasaki-shi, Kanagawa-ken(JP)**

Inventor: **Yokoyama, Hideharu**
**35-23, Higashiminemachi**
**Ohta-ku, Tokyo(JP)**
Inventor: **Irie, Teruo**
**16-13, Nakano 6-chome**
**Nakano-ku, Tokyo(JP)**
Inventor: **Umemura, Kiyoshi**
**49-16, Sugao 3-chome, Miyamae-ku**
**Kawasaki-shi, Kanagawa-ken(JP)**

(74) Representative: **Ben-Nathan, Laurence Albert et al**
**Urquhart-Dykes & Lord 91 Wimpole Streeteet**
**London W1M 8AH(GB)**

(54) Impact memorizing unit.

(57) An impact memorizing unit has a processing module box (2) containing therein operation memorizing means for processing and memorizing impact information from an impact detecting signal, and a sensor module box containing therein an impact sensor and formed in such a manner as to be spaced apart from the processing module box (1). An impact detecting signal obtained from the sensor module box is supplied to the processing module box through a signal transferring medium (3).

# F I G. 1

EP 0 405 840 A1

# IMPACT MEMORIZING UNIT

## BACKGROUND OF THE INVENTION

### 1. Field of the Invention

This invention relates to an impact memorizing unit for analyzing information on impact to be applied to goods which are being transferred.

### 2. Brief Description of the Prior Art

Japanese Patent Early Laid-open Publication No. Sho 64-13465 provides an apparatus for detecting and memorizing information on impact to be applied to goods which are being transferred. This apparatus has an impact sensor and operation memorizing means contained in a single housing. This is installed under the same condition as the goods which are being transferred, impact to be applied to the single housing being detected by the impact sensor contained in the housing, impact information being processed from an impact detecting signal by the operation memorizing means and memorized so that the impact information can be read afterwards. This apparatus is capable of measuring only an impact value as impact information, an impact duration (the width of the wave form of impact wave) and an impacting direction.

In the above-mentioned prior art, there are such problems as that because the housing becomes comparatively large in size and heavy in weight, reproduction ability of impact which is actually applied to the goods is inferior and the impact sensor is unable to correctly detect the impact information.

Also, impact which is applied to the impact sensor is applied to a circuit element forming the operation memorizing means.

Also, in the conventional device, because the impact sensor is directly installed on the goods, it is not only impossible to detect the actual impact but also the device is unusable depending on the goods due to large size of the goods.

The present invention is accomplished in view of the above-mentioned situation.

## SUMMARY OF THE INVENTION

It is therefore a general object of the present invention to provide an impact memorizing unit which is free from the above-mentioned problems inherent in the conventional device.

To achieve the above object, there is essentially provided an impact memorizing unit comprising a processing module box containing therein operation memorizing means for processing and memorizing impact information from an impact detecting signal, and a sensor module box containing therein an impact sensor and formed in such a manner as to be spaced apart from the processing module box. An impact detecting signal obtained from the sensor module box is supplied to the processing module box through a signal transferring medium. The signal transmitting medium is preferably a cable transmitting means adapted to transmit the impact detecting signal as an electric signal and an optical signal.

It may also be space transmitting means adapted to transmit the impact detecting signal as an optical signal, an electric wave signal, etc. The sensor module box may contain therein means for converting a signal obtained from the impact sensor to an electric voltage or an electric current, together with the impact sensor. Furthermore, the sensor module box may include mounting means for securing the box to an object to be measured.

The impact memorizing unit has the impact sensor contained in the sensor module box which is separate from the processing module box. This sensor module box is small in size and excellent in responsibility to impact. Such sensor module box is installed such that impact applied to the goods can be picked up with a favorable reproducing ability. On the other hand, the processing module box containing the operation memorizing means is installed in such a manner as to be spaced apart from the sensor module box, so that an im pact detecting signal obtained in the sensor module box is taken into the processing module box through a signal transmitting medium and a proper operation memorizing processing is performed.

The processing module box, when in use as mentioned above, is transferred together with the sensor module box and when after used, is taken to an analyzing place where the impact information is read and correctly analyzed by, for example, a personal computer, etc. and results of such analysis are used for improving the transferring method and packing method. At that time, the sensor module box can be left mounted on the goods (for example, goods or package and container). The above-mentioned problems inherent in the prior art can surely be solved by the afore-mentioned arrangement.

The above and other objects and features of the present invention will become manifest to those skilled in the art upon reading the following detailed description of the preferred embodiment with reference to the accompanying drawings.

## BRIEF DESCRIPTION OF THE DRAWINGS

Fig. 1 is a perspective view of an impact memorizing unit according to one embodiment of the present invention;

Fig. 2 is a side view of an impact memorizing unit show ing one example in which a cable is used as a signal transmitting medium;

Fig. 3 is a side view showing one example in which a space transmitting means is used;

Figs. 4(A) and 4(B) are flowcharts showing an impact sensor and an operation memorizing means contained in a sensor module box and a processing module box and explaining the function thereof; and

Fig. 5 is a side view for explaining the using state of the impact memorizing unit.

## DETAILED DESCRIPTION OF THE EMBODIMENT

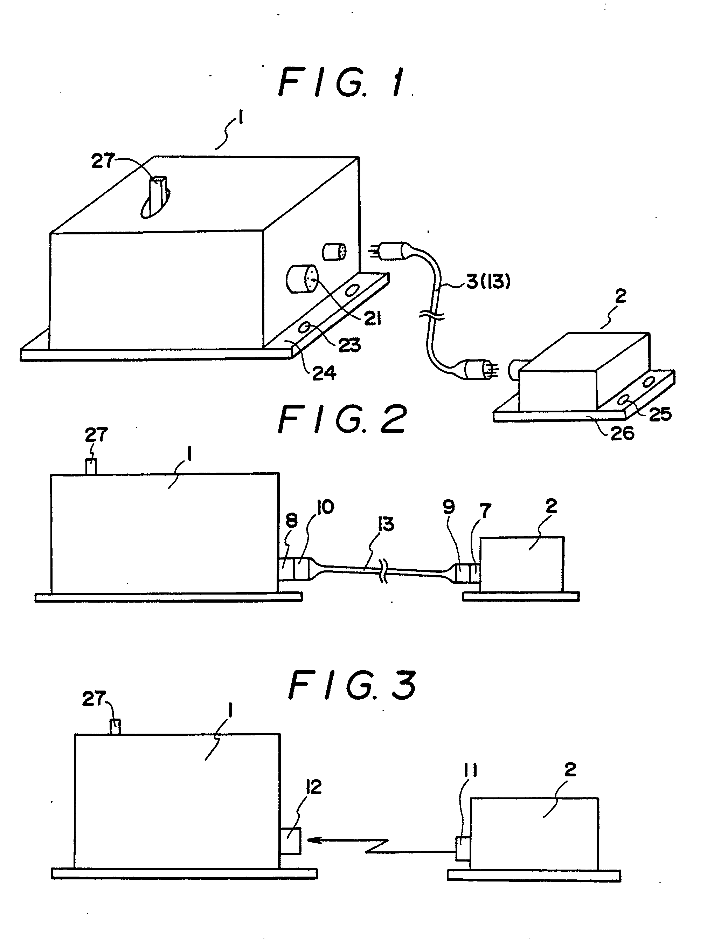

The embodiment of the present invention will be described with reference to Figs. 1 through 5.

The numeral 1 denotes a processing module box, 2 a sensor module box, and 3 a signal transmitting medium disposed between the module boxes 1 and 2.

The processing module box 1 contains therein an operation memorizing means 4 and a battery 22 as a power source therein, and the sensor module box 2 contains therein an impact sensor 5. Otherwise, the module box 2 contains therein an impact sensor 5 and a signal converter 6. The module boxes 1 and 2 are provided with mounting bases 24 and 26 having, for example, mounting holes 23 and 25.

The impact sensor 5 comprises, for example, a voltage accelerating sensor and comprises three sensors for detecting impact in three axial directions X, Y and Z.

The signal converter 6 is adapted to remove adverse affection caused by external turbulence factors such as noises, etc. at the time when an impact detecting signal or an electric signal output from the impact sensor 5 are immediately converted to an electric voltage or an electric signal and transmitted the same to the signal transmitting medium 3 in its amplified state.

As shown in Figs. 1 and 2, the sensor module box 2 and the processing module box 1 are connected by a signal transmitting cable 13, and an impact detecting signal detected in the sensor module box 2 is taken into the processing module box 1 through the cable 13. In this case, one or both of the module boxes 1 and 2 are provided with connectors 7 and 8, and one or both ends of the cable 13 are provided with connectors 9 and 10 which are connected with the connectors 7 and 8, so that both module boxes 1 and 2 can be handled in their separated states. The cable 13 and the connectors 7 and 10 become a signal transmitting medium 3.

In the same sense, as is shown in Fig. 3, both the module boxes 1 and 2 are connected by a space transmitting means for transmitting an impact detecting signal as an optical signal, an electric wave signal, etc.

The module boxes 1 and 2 are provided with a transmitter 11 and a receiver 12 for transmitting and receiving the above-mentioned optical signals and electric wave signals, respectively. For example, in case of an optical signal, the transmitter 11 and the receiver 12 are photoelectric interconverting elements such as LED, photodiode, etc. The transmitter and receiver 11 and 12 act as signal transmitting media.

In this way, the impact detecting signal detected in the sensor module box 2 is taken into the processing module box 1 through the signal transmitting medium 3 and the impact information is calculated and memorized from the impact detecting signal by the operation memorizing means 4.

The operation memorizing means 4 includes means for calculating a maximum impact value and memorizing the same in accordance with the impact detection signal, means for measuring the duration time (wave form width of the impact wave) of an impact wave including the maximum impact value and memorizing the same, means for measuring the generating time (minute, hour, day, month, and year) of this impact, and means for measuring the impact direction and memorizing the same.

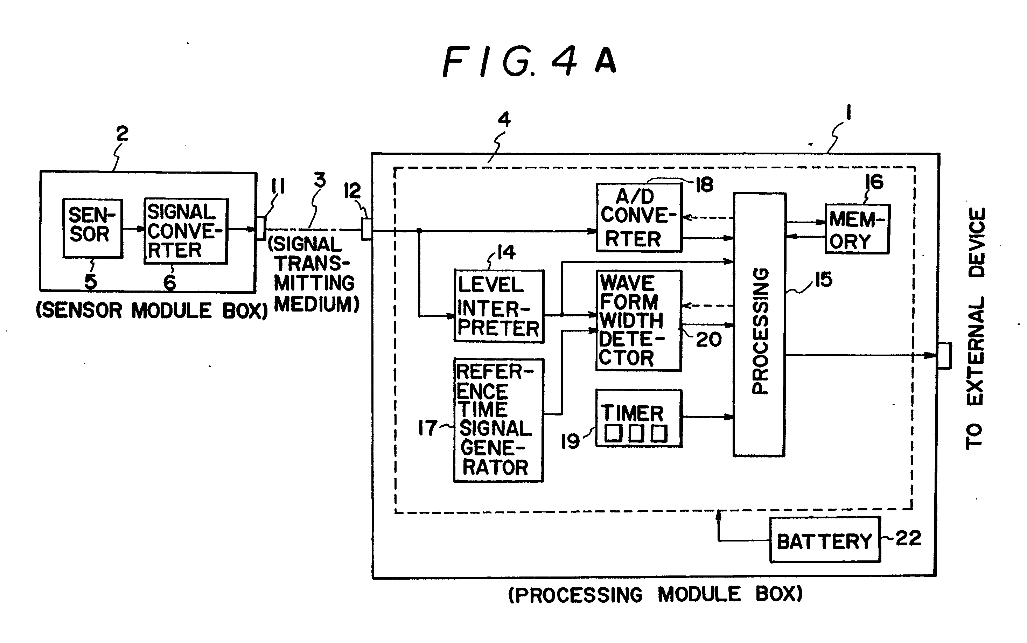

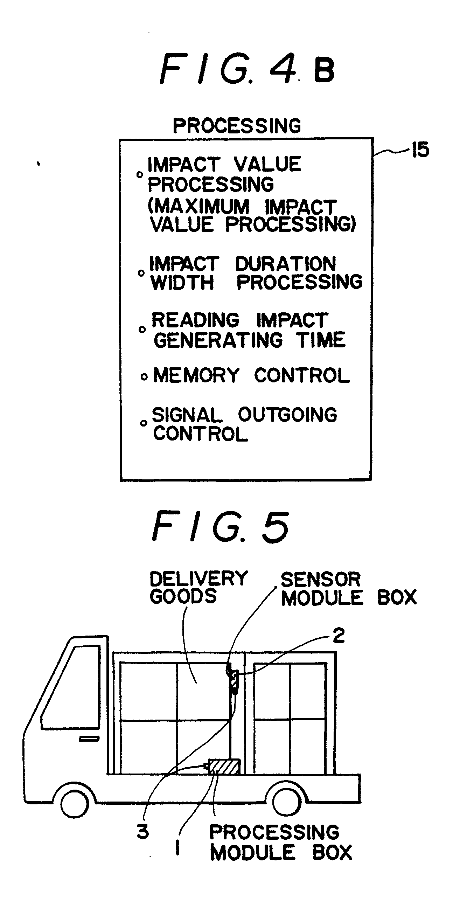

The exemplified examples of Figs. 4(A) and 4-(B) will be described in detail. A level interpreter 14 interprets as to whether impact detecting signals in various directions are signals more than the threshold value or not respectively. When the impact detecting signals are signals more than the threshold value, it causes the operation processing portion 15 to be started and at the same time, the width of wave lengths of signals in various directions, the signals being already interpreted as to level in a wave form width detector 20, are counted based on pulse signals which are output at predetermined intervals from the reference time signal generator 17, and the same is processed in the operation processing portion 15 so as to be stored in the memory as a impact duration time per each direction together with various direction information.

On the other hand, the above impact detection signal (analog signal) is converted to a digital signal by an analog digital converter 18 and the resultant is processed to figure out a maximum impact value so as to be stored in the memory 16 by a memory control means.

Furthermore, the operation memorizing means 4 is provided therein a timer 19 which is adapted to generate information on minute, hour, day, month and year and takes in information on the above-mentioned minute, hour, day, month and year the time when an impact generating time reading means of the operation processing portion 15 requires, that is, when the level interpreter 14 interprets a signal of a threshold value or more, and causes the memory to memorize and store the same as an impact generating time information. The operation memorizing means 4 is adapted to measure both the impact duration more than the reference level and the impact generating time and memorize the same. At the same time, it memorizes various impact information regarding the maximum impact value and impact direction and these are output to an external device such as, for example, a personal computer, from the memory 16 by a signal output control means. The processing module box 1 is provided with an impact information outputting connector 21 for connecting the external device. This information analyzed by the personal computer is used for improving the transferring method and packing method.

The above-mentioned impact memorizing unit, as exemplified in Fig. 5, is constructed such that the sensor module box 2 is located in a position where it can detect the actual impact to be applied to goods such that the impact can be favorably reproduced by mounting means such as mounting base 26, etc., and the processing module box 1 is located in an optional positioned spaced away from the sensor module box 2, both the module boxes 1 and 2 being signalwise interconnected by a signal transmitting medium 3 such as the cable 13 so as to be put in a using state. The processing module box 1 is provided with an actuating start switch 27, and operating electric power is supplied to the operation processing portion 15, etc. from a battery 22 contained in the box 1. Also, this operating electric power is supplied to the signal converter 6 of the sensor module box 2 through the cable 13. Where the signal transmitting medium 2 is a space transmitting means, the battery is also set in the sensor module box 2.

As described in the foregoing, the impact memorizing unit is designed such that the sensor module box containing the impact sensor is made small in size and light in weight to improve its responsibility to the impact and can be installed in a position where it can pick up the impact to be incurred to the carrying goods such that the impact can be favorably reproduced. On the other hand, the processing module containing the operation memorizing means is installed in a place spaced apart from the sensor module box and an impact detecting signal obtained in the sensor module box is taken in the processing module box through a signal transmitting medium, thereby to perform a proper operation memorizing processing and enabling to provide a correct impact information.

Also, the processing module box and the sensor module box are transferred together with goods loaded on vehicles, ships, etc. After used, only the processing module box is separated from the sensor module box and taken to an analyzing place where the impact information is correctly read by, for example, a personal computer, etc., and the result of analysis can be used for improving the carrying method and packing method. At that time, the sensor module box is left as mounted on the goods to be transferred (for example, goods or a package or a container) so that it can be used for goods to be transferred next.

Although one embodiment of the present invention has been described in detail, it is to be understood that the invention is not limited to this embodiment. Various changes, modifications and alternations can be made without departing from the spirit of the invention.

## Claims

1. An impact memorizing unit comprising a processing module box containing therein operation memorizing means for processing and memorizing impact information from an impact detecting signal; and

a sensor module box containing therein an impact sensor and formed in such a manner as to be spaced apart from said processing module box; an impact detecting signal obtained from said sensor module box being supplied to said processing module box through a signal transferring medium.

2. An impact memorizing unit as claimed in claim 1, wherein said signal transmitting medium is a cable transmitting means adapted to transmit the impact detecting signal as an electric signal and an optical signal.

3. An impact memorizing unit as claimed in claim 1, wherein said signal transmitting medium is space transmitting means adapted to transmit the impact detecting signal as an optical signal, an electric wave signal, etc.

4. An impact memorizing unit as claimed in claim 1, wherein said sensor module box contains therein means for converting a signal obtained from said impact sensor to an electric voltage or an electric current, together with said impact sensor.

5. An impact memorizing unit as claimed in claim 1, wherein said sensor module box includes mounting means for securing said box to an object to be

measured.

F I G. 1

F I G. 2

F I G. 3

# F I G. 4 A

**TO EXTERNAL DEVICE**

(PROCESSING MODULE BOX)

1

4

MEMORY 16

PROCESSING 15

A/D CONVE-RTER 18

WAVE FORM WIDTH DETE-CTOR 20

TIMER ☐ ☐ ☐ 19

BATTERY 22

LEVEL INTER-PRETER 14

REFER-ENCE TIME SIGNAL GENE-RATOR 17

3 12

(SIGNAL TRANS-MITTING MEDIUM)

11

SIGNAL CONVE-RTER 6

SEN-SOR 5

2

(SENSOR MODULE BOX)

...

# F I G. 4. B

PROCESSING

- IMPACT VALUE PROCESSING (MAXIMUM IMPACT VALUE PROCESSING)

- IMPACT DURATION WIDTH PROCESSING

- READING IMPACT GENERATING TIME

- MEMORY CONTROL

- SIGNAL OUTGOING CONTROL

15

# F I G. 5

DELIVERY GOODS

SENSOR MODULE BOX

2

3

1

PROCESSING MODULE BOX

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4550589 (W.S.WRIGHT JR.) <br> * column 2, line 16 - column 2, line 68; figures 1-6 * | 1-5 | G01L5/00 <br> G01P1/07 |
| A | PATENT ABSTRACTS OF JAPAN <br> vol. 10, no. 243 (P-489)(2299) 21 August 1986, <br> & JP-A-61 073040 (NIPPON CERAMIC) 15 April 1986, <br> * the whole document * | 2, 3 | |
| A | DD-A-252687 (VEB KRAFTVERKEHR ERFURT) <br> * the whole document * | 1 | |
| A | TECHNISCHES MESSEN TM. <br> vol. 51, no. 10, October 1984, MUNCHEN DE <br> pages 356 - 361; W.Burger et.al.: <br> "Erfassung,Ubertragung und Verarbeitung von Messdaten an einen Nocken-Stössel-Prüfstand" <br> * page 359; figures 7, 9 * | 1, 5 | |
|  |  |  | TECHNICAL FIELDS SEARCHED (Int. Cl.5) |
|  |  |  | G01L <br> G01P |

The present search report has been drawn up for all claims

| Place of search | Date of completion of the search | Examiner |
|---|---|---|
| BERLIN | 17 AUGUST 1990 | LEMMERICH J. |